# EUROPÄISCHE PATENTSCHRIFT

(11) **EP 1 366 580 B1**
(45) Veröffentlichungstag und Bekanntmachung des Hinweises auf die Patenterteilung: **11.05.2005**
(21) Anmeldenummer: 02712792.7
(22) Anmeldetag: 21.02.2002
(51) Int. Cl.: H04B 7/08

(54) **DIVERSITY-ANTENNENANORDNUNG**
DIVERSITY ANTENNA ARRANGEMENT
SYSTEME D'ANTENNES DIVERSIFIE

(30) Priorität: 27.02.2001 DE 10109359
(43) Veröffentlichungstag der Anmeldung: 03.12.2003
(73) Patentinhaber: ROBERT BOSCH GMBH, 70442 Stuttgart (DE)
(72) Erfinder: RADDANT, Hans-Joachim, 14055 Berlin (DE)
(86) Internationale Anmeldenummer: PCT/DE2002/000606
(87) Internationale Veröffentlichungsnummer: WO 2002/069522

(56) Entgegenhaltungen:
- EP-A- 0 201 977
- EP-A- 0 274 157
- DE-A- 3 634 439

## Beschreibung

### Stand der Technik

Die Erfindung geht von einer Diversity-Antennenanordnung nach der Gattung des Hauptanspruchs aus.

Bekannt ist eine Diversity-Antennenanordnung aus der EP 02 01 977 A2 für den mobilen Empfang frequenzmodulierter Schwingungen mit einem Empfänger, mindestens zwei Antennen und einem Diversity-Prozessor, dem ein ZF-Signal (Zwischenfrequenz) vom Empfänger zugeführt wird. Der Diversity-Prozessor überprüft das zugeführte ZF-Signal und schaltet auf eine andere Antenne oder eine andere lineare Kombination von Antennensignalen um, wenn das ZF-Signal Störungen aufweist. Eine Störung wird erkannt, wenn gleichzeitig ein Amplitudeneinbruch eine Amplitudenschwelle überschreitet und der Frequenzhub eine Frequenzhubschwelle überschreitet. Vorteil dieses Verfahrens ist, dass neben der Schaltungsanordnung zum Erkennen einer Störung nur noch Antennenumschalter benötigt werden. Dieses Verfahren läßt sich also preiswert in Geräte umsetzen, insbesondere, wenn sich die Schaltungsanordnung zum Erkennen einer Störung innerhalb eines Autoradios befindet, wo der ZF-Verstärker oder der Demodulator die auszuwertenden Signale zur Verfügung stellt.

Dennoch ist der Umschaltvorgang auf eine andere Antenne oder eine andere Linearkombination von Antennensignalen, insbesondere beim Empfang von schwachen Rundfunksignalen, im Lautsprecher hörbar. Dadurch fügt die Diversity-Antennenanordnung schon gestörten Empfangssignalen weitere Störungen hinzu. Bei großer Schalthäufigkeit treten die Störungen deutlich hervor.

Aus der DE 36 34 439 A1 ist ein Verfahren und eine Schaltungsanordnung zum Empfang von Radiowellen bekannt. Dabei wird ein Diversity-Verfahren beschrieben, bei dem das von jeder Antenne empfangene Signal im Empfänger in die Zwischenfrequenz ZF umgesetzt wird. Die ZF-Signale der einzelnen Antennen werden mit Koeffizienten bewertet und die bewerteten Signale zu einem Summensignal addiert. Die Koeffizienten werden im Sinne einer Minimierung zeitlicher Schwankungen der Amplitude des ZF-Summensignals gebildet.

Vorteilhaft bei diesem Verfahren ist es, dass nicht geschaltet wird und somit keine Schaltgeräusche hörbar sind. Dafür wird allerdings für jede Antenne neben der Schaltungsanordnung zur Regelung der Koeffizienten ein kompletter Radio-Eingangsteil mit Vorstufe, Mischer und ZF-Filter benötigt.

### Vorteile der Erfindung

Die erfindungsgemäße Diversity-Antennenanordnung mit den Merkmalen des Hauptanspruchs hat demgegenüber den Vorteil, dass zusätzlich zu einem Antennenumschalter zum Umschalten zwischen verschiedenen Antennen, einer Auswertungsschaltung zur Auswertung der Empfangsqualität eines Signals, das von einem über den Antennenumschalter einer Empfangsvorrichtung zugeführten Empfangssignal mindestens einer der Antennen abgeleitet ist, und zur Ausgabe eines in Abhängigkeit der ermittelten Empfangsqualität gebildeten Auswertungssignals und einer Steuervorrichtung, die den Antennenumschalter in Abhängigkeit des Auswertungssignals steuert, eine Bewertungsvorrichtung vorgesehen ist, die das über den Antennenumschalter der Empfangsvorrichtung zugeführte Signal mit einem ersten Koeffizienten bewertet, dass mindestens eine weitere Antenne vorgesehen ist, deren Empfangssignal die Bewertungsvorrichtung mit einem zweiten Koeffizienten bewertet, dass eine Summierschaltung vorgesehen ist, die die mit den Koeffizienten bewerteten Signale addiert, dass eine Regelschaltung vorgesehen ist, die die Koeffizienten im Sinne einer Minimierung zeitlicher Schwankungen der Amplitude des Summensignals bildet, und dass die Auswertungsschaltung die Empfangsqualität des Summensignals auswertet. Auf diese Weise wird eine Diversity-Antennenanordnung geschaffen, die eine Reduzierung der Zahl der Umschaltvorgänge bei reduziertem Bauteileaufwand ermöglicht. Auf diese Weise werden Kosten eingespart.

Durch die in den Unteransprüchen aufgeführten Maßnahmen sind vorteilhafte Weiterbildungen und Verbesserungen der im Hauptanspruch angegebenen Diversity-Antennenanordnung möglich.

Besonders vorteilhaft ist es, dass der Antennenumschalter mit der Bewertungsvorrichtung über eine Verbindungsleitung verbunden ist, auf der zum einen die empfangenen Signale mindestens einer der Antennen zur Bewertungsvorrichtung und zum anderen die Auswertungssignale von der Auswertungsschaltung zur Steuerschaltung übertragen werden. Auf diese Weise läßt sich die Funktionalität der Verbindungsleitung erhöhen und der Verbindungsaufwand reduzieren.

Ein weiterer Vorteil ergibt sich dadurch, dass am Ausgang der Auswertungsschaltung und/oder am Eingang der Steuervorrichtung ein Tiefpass angeordnet ist. Auf diese Weise wird verhindert, dass sich hochfrequente Störungen der Auswertungsschaltung und/oder der Steuervorrichtung den von den Antennen empfangenen HF-Signalen (Hochfrequenz) überlagern. Andererseits wird verhindert, dass die Auswertungsschaltung und die Steuervorrichtung durch die empfangenen Hochfrequenz-Signale gestört werden.

Ein weiterer Vorteil besteht darin, dass die mindestens eine weitere Antenne über einen weiteren Antennenumschalter mit der Bewertungsvorrichtung verbindbar ist. Auf diese Weise können mehrere Antennen gleichzeitig umgeschaltet werden, und es lassen sich Antennenkombinationen realisieren, die völlig unabhängig voneinander sind.

Vorteilhaft ist es weiterhin, dass die Steuervorrichtung auch den weiteren Antennenumschalter ansteuert. Auf diese Weise wird die Funktionalität der Steuervorrichtung erhöht und kein zusätzliches Bauteil benötigt.

Ein weiterer Vorteil besteht darin, dass eine weitere Steuervorrichtung vorgesehen ist, die den weiteren Antennenumschalter ansteuert. Auf diese Weise läßt sich eine größere Anzahl verschiedener Antennenkombinationen für den Diversity-Empfang realisieren.

Besonders vorteilhaft ist es, dass die Kombinationen der mit der Empfangsvorrichtung gleichzeitig verbindbaren Antennen unterschiedliche Richtcharakteristiken aufweisen. Auf diese Weise kann sichergestellt werden, dass die verschiedenen Kombinationen echte Alternativen für den Diversity-Empfang darstellen und nicht Signale empfangen, die im wesentlichen gleich viele Störungen aufnehmen, so dass ein Umschalten zwischen den verschiedenen Kombinationen keine Verbesserung im Signalempfang bringt.

### Zeichnung

Ausführungsbeispiele der Erfindung sind in der Zeichnung dargestellt und in der nachfolgenden Beschreibung näher erläutert. Es zeigen Figur 1 ein Blockschaltbild einer ersten Ausführungsform einer erfindungsgemäßen Diversity-Antennenanordnung, Figur 2 ein Blockschaltbild einer zweiten Ausführungsform der erfindungsgemäßen Diversity-Antennenanordnung, Figur 3 ein Blockschaltbild einer dritten Ausführungsform der erfindungsgemäßen Diversity-Antennenanordnung, Figur 4 ein Blockschaltbild einer vierten Ausführungsform der erfindungsgemäßen Diversity-Antennenanordnung, Figur 5 ein Blockschaltbild einer Auswertungsschaltung und Figur 6 ein Blockschaltbild einer fünften Ausführungsform der erfindungsgemäßen Diversity-Antennenanordnung.

### Beschreibung der Ausführungsbeispiele

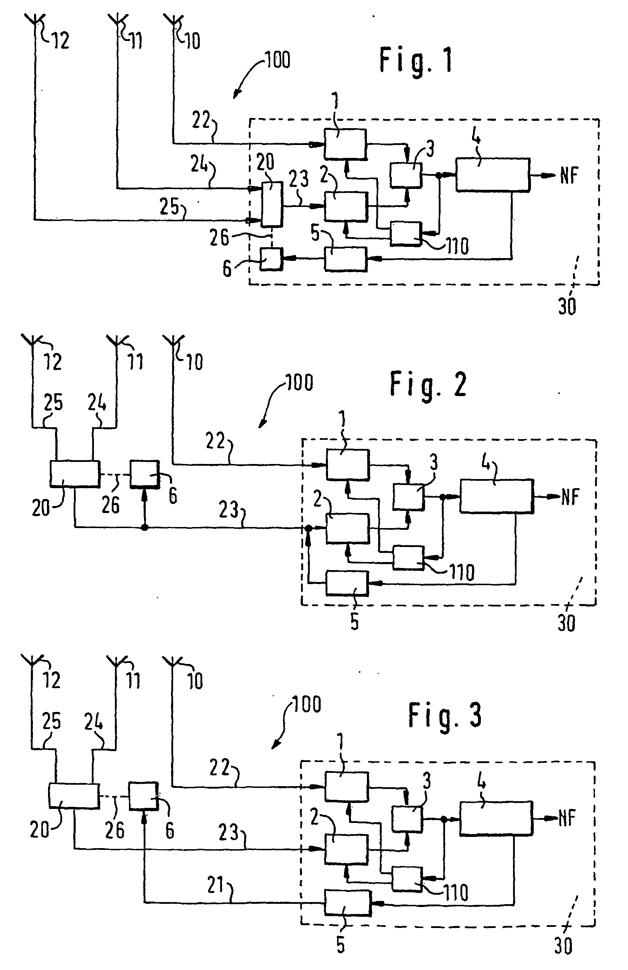

In Figur 1 kennzeichnet 100 eine Diversity-Antennenanordnung mit einer ersten Antenne 10, einer zweiten Antenne 11 und einer dritten Antenne 12. Die erste Antenne 10 liefert ein erstes Empfangssignal, die zweite Antenne 11 liefert ein zweites Empfangssignal und die dritte Antenne 12 liefert ein drittes Empfangssignal. Die Empfangssignale der Antennen 10, 11, 12 sind einem Empfangsgerät 30 zugeführt, das beispielsweise als Rundfunkempfänger ausgebildet sein kann. Der Rundfunkempfänger kann dabei insbesondere mobil und beispielsweise als Autoradio ausgebildet sein. Das Empfangsgerät 30 umfasst ein erstes Bewertungsmodul 1, dem das erste Empfangssignal zugeführt ist. Das erste Bewertungsmodul 1 stellt eine Eingangsschaltung dar, die das erste Empfangssignal in ein erstes ZF-Signal (Zwischenfrequenz) transformiert und mit einem ersten Koeffizienten multipliziert und somit bewertet. Das auf diese Weise bewertete erste ZF-Signal ist einer Summierschaltung 3 zugeführt, die ausgangsseitig mit einer Empfangsvorrichtung 4 verbunden ist. Das Empfangsgerät 30 umfasst weiterhin einen ersten Antennenumschalter 20, dem das zweite Empfangssignal und das dritte Empfangssignal zugeführt sind und der wahlweise die zweite Antenne 11 oder die dritte Antenne 12 mit einem zweiten Bewertungsmodul 2 verbindet, das das von der zweiten Antenne 11 oder der dritten Antenne 12 empfangene Signal in ein zweites ZF-Signal umwandelt und das zweite ZF-Signal mit einem zweiten Koeffizienten multipliziert und damit bewertet. Das solchermaßen bewertete zweite ZF-Signal wird anschließend der Summierschaltung 3 zugeführt. Die Summierschaltung 3 addiert das bewertete erste ZF-Signal und das bewertete zweite ZF-Signal zu einem ZF-Summensignal und führt dieses ZF-Summensignal der Empfangsvorrichtung 4 zu. Die Empfangsvorrichtung 4 verstärkt das ZF-Summensignal und führt eine Demodulation des verstärkten ZF-Summensignals durch, so dass im Ausgang der Empfangsvorrichtung 4 ein NF-Summensignal (Niederfrequenz) vorliegt. Das NF-Summensignal kann dann über in Figur 1 nicht dargestellte weitere Empfangsstufen einer Tonwiedergabevorrichtung, beispielsweise einem Lautsprecher, zur akustischen Wiedergabe zugeführt werden.

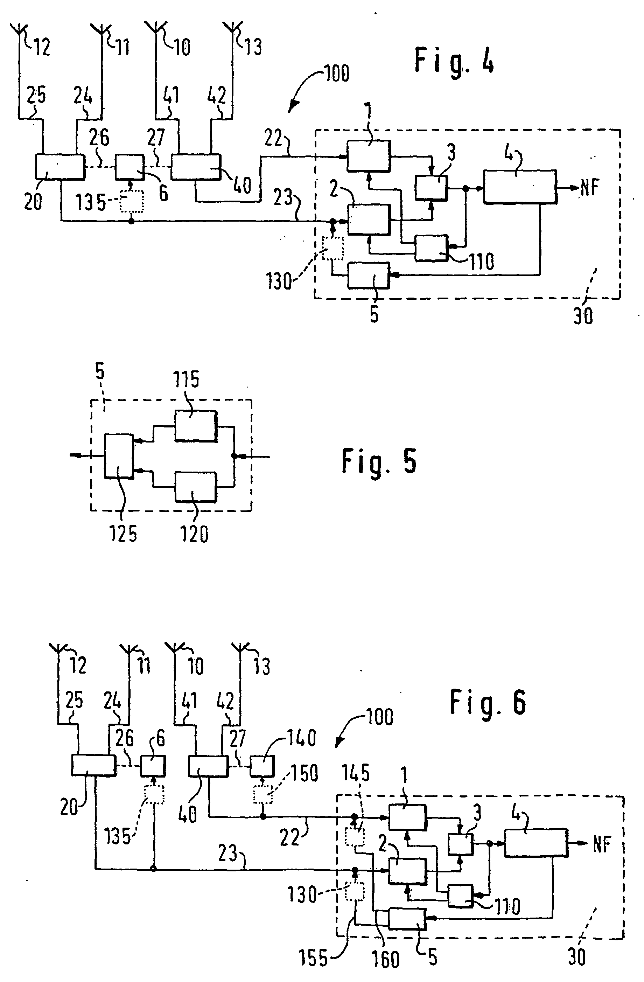

Das Empfangsgerät 30 umfasst weiterhin eine Regelschaltung 110, der von der Empfangsvorrichtung 4 entweder das verstärkte ZF-Summensignal oder das demodulierte verstärkte ZF-Summensignal oder, wie in den Figuren dargestellt, das direkt von der Summierschaltung 3 abgegebene ZF-Summensignal zugeführt ist und die den ersten Koeffizienten des ersten Bewertungsmoduls und den zweiten Koeffizienten des zweiten Bewertungsmoduls im Sinne einer Minimierung zeitlicher Schwankungen der Amplitude des der Regelschaltung 110 von der Empfangsvorrichtung 4 zugeführten Signals bildet. Das erste Bewertungsmodul 1 und das zweite Bewertungsmodul 2 bilden dabei eine Bewertungsvorrichtung des Empfangsgerätes 30. Das der Regelschaltung 110 zugeführte und im folgenden als bewertetes Summensignal bezeichnete Signal wird außerdem einer Auswertungsschaltung 5 des Empfangsgerätes 30 zugeführt, die ausgangsseitig mit einer ersten Steuervorrichtung 6 verbunden ist. Die erste Steuervorrichtung 6 gibt ein erstes Steuersignal an den ersten Antennenumschalter 20 ab. Der erste Antennenumschalter 20 verbindet wahlweise die zweite Antenne 11 oder die dritte Antenne 12 mit dem zweiten Bewertungsmodul 2 in Abhängigkeit des ersten Steuersignals. Die Verbindungsleitung zwischen dem ersten Antennenumschalter 20 und dem zweiten Bewertungsmodul 2 ist mit dem Bezugszeichen 23 gekennzeichnet und wird im folgenden als zweite Verbindungsleitung bezeichnet. Die Verbindungsleitung zwischen der ersten Antenne 10 und dem ersten Bewertungsmodul 1 ist mit dem Bezugszeichen 22 gekennzeichnet und wird im folgenden als erste Verbindungsleitung bezeichnet. Die Verbindungsleitung zwischen der zweiten Antenne 11 und dem ersten Antennenumschalter 20 ist mit dem Bezugszeichen 24 gekennzeichnet und wird im folgenden als dritte Verbindungsleitung bezeichnet. Die Verbindungsleitung zwischen der dritten Antenne 12 und dem ersten Antennenumschalter 20 ist mit dem Bezugszeichen 25 gekennzeichnet und wird im folgenden als vierte Verbindungsleitung bezeichnet. Die Verbindungsleitung zwischen der ersten Steuervorrichtung 6 und dem ersten Antennenumschalter 20 ist mit dem Bezugszeichen 26 gekennzeichnet und wird im folgenden als Steuerleitung bezeichnet. Der erste Antennenumschalter 20 verbindet also entweder die dritte Verbindungsleitung 24 elektrisch mit der zweiten Verbindungsleitung 23 oder die vierte Verbindungsleitung 25 mit der zweiten Verbindungsleitung 23. Für die Umschaltung zwischen der zweiten Antenne 11 und der dritten Antenne 12 und deren wahlweise Verbindung mit der zweiten Verbindungsleitung 23 können im ersten Antennenumschalter 20 beispielsweise PIN-Dioden vorgesehen sein, die je nach Ansteuerung durch das erste Steuersignal der ersten Steuervorrichtung 6 in den leitenden oder sperrenden Zustand geschaltet werden können. Die erste Steuervorrichtung 6 steuert dabei den ersten Antennenumschalter 20 in Abhängigkeit des von der Auswertungsschaltung 5 gelieferten Auswertungssignals an. Die Auswertungsschaltung 5 wertet dazu die Empfangsqualität des bewerteten Summensignals aus. Dazu kann die Auswertungsschaltung 5 eine Störschwellenschaltung gemäß Figur 5 umfassen. Die Störschwellenschaltung prüft, ob eine Störung des bewerteten Summensignals eine vorgegebene Störschwelle überschreitet. Ist dies der Fall, so gibt die Auswertungsschaltung 5 ein Auswertungssignal ab, das die erste Steuervorrichtung 6 zur Umschaltung des ersten Antennenumschalters 20 auf die jeweils andere Antenne veranlasst. Andernfalls wird kein solches Auswertungssignal an die erste Steuervorrichtung 6 abgegeben und kein Umschaltvorgang im ersten Antennenumschalter 20 eingeleitet.

Dazu kann die Störschwellenschaltung einen Amplitudenschwellwertdetektor 115 umfassen, dem gemäß Figur 5 das bewertete Summensignal zugeführt ist. Wenn der Amplitudenschwellwertdetektor 115 einen Amplitudeneinbruch des bewerteten Summensignals feststellt, der eine vorgegebene Amplitudenschwelle überschreitet, so gibt die Auswertungsschaltung 5 ein Auswertungssignal ab, das die erste Steuervorrichtung 6 zur Umschaltung des ersten Antennenumschalters 20 auf die bislang nicht mit dem zweiten Bewertungsmodul 2 verbundene Antenne veranlasst. Andernfalls wird kein Umschaltvorgang eingeleitet.

Zusätzlich kann die Störschwellenschaltung gemäß Figur 5 einen Frequenzhubschwellwertdetektor 120 umfassen. Dieser ist besonders für den Empfang frequenzmodulierter Signale geeignet. Dem Frequenzhubschwellwertdetektor 120 ist ebenfalls das bewertete Summensignal zugeführt. Der Ausgang des Amplitudenschwellwertdetektors 115 und der Ausgang des Frequenzhubschwellwertdetektors 120 ist einem UND-Gatter 125 als Verknüpfungsglied zugeführt, dessen Ausgangssignal das Auswertungssignal bildet. Ein Umschaltvorgang wird eingeleitet, wenn das Ausgangssignal des Verknüpfungsgliedes 125 HIGH ist. Der Amplitudenschwellwertdetektor 115 gibt ein HIGH-Signal ab, wenn ein Amplitudeneinbruch des bewerteten Summensignals die vorgegebene Amplitudenschwelle überschreitet. Der Frequenzhubschwellwertdetektor 120 gibt ein HIGH-Signal ab, wenn ein Frequenzhubpuls des bewerteten Summensignals eine vorgegebene Frequenzhubschwelle überschreitet. Das bedeutet, dass ein Umschaltvorgang nur dann eingeleitet wird, wenn gleichzeitig ein Amplitudeneinbruch des bewerteten Summensignals die vorgegebene Amplitudenschwelle und ein Frequenzhubpuls des bewerteten Summensignals die vorgegebene Frequenzhubschwelle überschreitet. Durch die Koeffizientenbewertung in der Bewertungsvorrichtung 1, 2 wird wie beschrieben eine Minimierung der zeitlichen Schwankungen der Amplitude des bewerteten Summensignals bewirkt, so dass auf diese Weise die Häufigkeit der Umschaltvorgänge im ersten Antennenumschalter 20 reduziert werden kann.

Gemäß einer zweiten Ausführungsform nach Figur 2 kennzeichnen gleiche Bezugszeichen gleiche Elemente wie in Figur 1. Im Unterschied zu Figur 1 ist beim zweiten Ausführungsbeispiel nach Figur 2 der erste Antennenumschalter 20 und die erste Steuervorrichtung 6 außerhalb des Empfangsgerätes 30 angeordnet. Auf diese Weise läßt sich der erste Antennenumschalter 20 näher an der zweiten Antenne 11 und der dritten Antenne 12 anordnen. Gemäß dem zweiten Ausführungsbeispiel kann dabei die zweite Verbindungsleitung 23 zusätzlich zur Übertragung von Hochfrequenz-Signalen der zweiten Antenne 11 oder der dritten Antenne 12 zum zweiten Bewertungsmodul 2 auch zur Übertragung des von der Auswertungsschaltung 5 abgegebenen Auswertungssignals zur ersten Steuervorrichtung 6 verwendet werden. Dazu ist der Ausgang der Auswertungsschaltung 5 und der Eingang der ersten Steuervorrichtung 6 jeweils mit der zweiten Verbindungsleitung 23 verbunden. Dabei kann es zusätzlich vorgesehen sein, wie in Figur 2 gestrichelt angedeutet ist, den Ausgang der Auswertungsschaltung 5 durch einen ersten Tiefpass 130 vor Störungen durch die auf der zweiten Verbindungsleitung 23 übertragenen Hochfrequenz-Signale zu schützen. Außerdem kann durch den ersten Tiefpass 130 verhindert werden, dass hochfrequente Störungen am Ausgang der Auswertungsschaltung 5 in den Eingang des zweiten Bewertungsmoduls 2 gelangen. Zusätzlich oder alternativ kann am Eingang der ersten Steuervorrichtung 6 ein zweiter Tiefpass 135 angeordnet sein, der den Eingang der ersten Steuervorrichtung 6 vor Hochfrequenz-Signalen schützt, die auf der zweiten Verbindungsleitung 23 übertragen werden und der außerdem verhindert, dass hochfrequente Störungen am Eingang der ersten Steuervorrichtung 6 über die zweite Verbindungsleitung 23 in das zweite Bewertungsmodul 2 gelangen. Der erste Tiefpass 130 und der zweite Tiefpass 135 sind dabei so dimensioniert, dass sie für die Auswertungssignale durchlässig sind, wobei die Auswertungssignale bevorzugt niederfrequent im Vergleich zu den von der zweiten Antenne 11 oder der dritten Antenne 12 empfangenen Hochfrequenz-Signalen gewählt werden.

Der erste Tiefpass 130 kann gemäß Figur 2 von der Auswertungsschaltung 5 abgesetzt oder in diese integriert sein. Der zweite Tiefpass 135 kann gemäß Figur 2 von der ersten Steuervorrichtung 6 abgesetzt oder in diese integriert sein.

Gemäß einer dritten Ausführungsform nach Figur 3 kennzeichnen wiederum gleiche Bezugszeichen gleiche Elemente wie in den vorangegangenen Figuren. Das dritte Ausführungsbeispiel gemäß Figur 3 stellt eine Alternative zum zweiten Ausführungsbeispiel nach Figur 2 dar. Dabei wird die zweite Verbindungsleitung 23 nur zur Übertragung der hochfrequenten Empfangssignale der zweiten Antenne 11 oder der dritten Antenne 12 verwendet, wohingegen für die Übertragung des Auswertungssignals von der Auswertungsschaltung 5 zur ersten Steuervorrichtung 6 eine separate fünfte Verbindungsleitung 21 verwendet wird. Eine Tiefpassfilterung zum Schutz vor den bezüglich des zweiten Ausführungsbeispiels beschriebenen hochfrequenten Wechselwirkungen mit der zweiten Verbindungsleitung 23 ist dann beim dritten Ausführungsbeispiel nicht erforderlich. Auch beim dritten Ausführungsbeispiel nach Figur 3 befindet sich der erste Antennenumschalter 20 beispielhaft, aber nicht notwendigerweise, nicht innerhalb des Empfangsgerätes 30, sondern abgesetzt davon in der Nähe der beiden durch den ersten Antennenumschalter 20 umzuschaltenden Antennen 11, 12.

Gemäß einem vierten Ausführungsbeispiels nach Figur 4, in dem wiederum gleiche Bezugszeichen gleiche Elemente kennzeichnen wie in den vorangegangenen Figuren, ist im Unterschied zum zweiten Ausführungsbeispiel nach Figur 2 die erste Antenne 10 über eine sechste Verbindungsleitung 41 und einen zweiten Antennenumschalter 40 mit der ersten Verbindungsleitung 22 verbindbar. Weiterhin ist eine vierte Antenne 13 vorgesehen, die über eine siebte Verbindungsleitung 42 und den zweiten Antennenumschalter 40 ebenfalls mit der ersten Verbindungsleitung 22 verbindbar ist. Der zweite Antennenumschalter 40 hat dabei die Funktion, wahlweise die erste Antenne 10 oder die vierte Antenne 13 mit dem ersten Bewertungsmodul 1 zu verbinden. Der erste Antennenumschalter 40 wird dabei gemäß Figur 4 ebenfalls von der ersten Steuervorrichtung 6 über eine zweite Steuerleitung 27 angesteuert. Zur Übertragung des Auswertungssignals wird beim vierten Ausführungsbeispiel nach Figur 4, wie auch beim zweiten Ausführungsbeispiel nach Figur 2, die zweite Verbindungsleitung 23 mitbenutzt. Während bei den drei zuvor beschriebenen Ausführungsbeispielen die Empfangssignale der ersten Antenne 10 immer in das bewertete Summensignal eingingen, so dass sich entweder eine Kombination der ersten Antenne 10 mit der zweiten Antenne 11 oder eine Kombination der ersten Antenne 10 mit der dritten Antenne 12 je nach Schaltzustand im ersten Antennenumschalter 20 für die Bildung des bewerteten Summensignals ergibt, lassen sich beim vierten Ausführungsbeispiel nach Figur 4 zwei voneinander völlig unabhängige Antennenkombinationen zur Bildung des bewerteten Summensignals realisieren. Der erste Antennenumschalter 20 und der zweite Antennenumschalter 40 werden dabei gleichzeitig von der ersten Steuervorrichtung 6 umgeschaltet. Somit lassen sich je nach Einstellung des ersten Antennenumschalters 20 und des zweiten Antennenumschalters 40 folgende Kombinationspaare alternativ realisieren: Die erste Antenne 10 kann mit der zweiten Antenne 11 und die dritte Antenne 12 kann mit der vierten Antenne 13 kombiniert werden. Andere Kombinationsmöglichkeiten sind bei dieser Realisierungsform nicht möglich. Alternativ kann die erste Antenne 10 mit der dritten Antenne 12 und die zweite Antenne 11 mit der vierten Antenne 13 kombiniert werden. Auch bei dieser Realisierungsform sind keine weiteren Kombinationen möglich.

Wenn insgesamt vier Antennenkombinationen möglich sein sollen, so muß dem zweiten Antennenumschalter 40 ein zweites Steuersignal, unabhängig vom ersten Steuersignal, zugeführt werden. Ein entsprechendes fünftes Ausführungsbeispiel zeigt Figur 6, bei dem im Unterschied zum vierten Ausführungsbeispiel nach Figur 4 keine Verbindung zwischen der ersten Steuervorrichtung 6 und dem zweiten Antennenumschalter 40 und dafür eine zweite Steuervorrichtung 140 vorgesehen ist, die über eine zweite Steuerleitung 27 mit dem zweiten Antennenumschalter 40 verbunden ist. Auch im fünften Ausführungsbeispiel nach Figur 6 kennzeichnen gleiche Bezugszeichen gleiche Elemente wie in den vorstehend beschriebenen Ausführungsbeispielen. Gemäß dem fünften Ausführungsbeispiel weist die Auswertungsschaltung 5 einen zweiten Ausgang auf, der an die erste Verbindungsleitung 22 angeschlossen ist, wohingegen der erste Ausgang der Auswertungsschaltung 5 an die zweite Verbindungsleitung 23 angeschlossen ist. Dabei ist gemäß Figur 6 der erste Ausgang der Auswertungsschaltung 5 mit dem Bezugszeichen 155 gekennzeichnet und der zweite Ausgang der Auswertungsschaltung 5 mit dem Bezugszeichen 160. Wie beim Ausführungsbeispiel nach Figur 2 wird auch beim Ausführungsbeispiel nach Figur 6 die zweite Verbindungsleitung 23 zur Übertragung des vom ersten Ausgang 155 zur Übertragung des von der Auswertungsschaltung 5 abgegebenen Auswertungssignals mit genutzt, wozu die erste Steuervorrichtung 6 ebenfalls an die zweite Verbindungsleitung 23 angeschlossen ist. Die zweite Steuervorrichtung 140 ist an die erste Verbindungsleitung 22 angeschlossen, so dass in entsprechender Weise die erste Verbindungsleitung 22 für die Übertragung des am zweiten Ausgang 160 der Auswertungsschaltung 5 abgegebenen Auswertungssignals zur zweiten Steuervorrichtung 140 mitbenutzt werden kann. Entsprechend dem eingangsseitig zur ersten Steuervorrichtung 6 angeordneten zweiten Tiefpass 135 kann die zweite Steuervorrichtung 140 gemäß Figur 6 eingangsseitig einen vierten Tiefpass 150 aufweisen. Entsprechend dem am ersten Ausgang 155 der Auswertungsschaltung 5 angeordneten ersten Tiefpass 130 kann die Auswertungsschaltung 5 am zweiten Ausgang 160 einen dritten Tiefpass 145 aufweisen. Die Tiefpässe dienen dabei, wie zum zweiten Ausführungsbeispiel nach Figur 2 bereits beschrieben, zum Schutz vor hochfrequenten Störungen. Um vier verschiedene Antennenkombinationen zur Bildung des bewerteten Summensignals zu ermöglichen, kann es vorgesehen sein, den gemäß Figur 5 beschriebenen Ausgang der Störschwellenschaltung abwechselnd mit dem ersten Ausgang 155 und dem zweiten Ausgang 160 der Auswertungsschaltung 5 zu verbinden, wozu ein entsprechender Schalter vorgesehen sein kann. Auf diese Weise lassen sich die folgenden vier Antennenkombinationen realisieren: Die erste Antenne 10 kann mit der zweiten Antenne 11 oder der dritten Antenne 12 und die vierte Antenne 13 kann mit der zweiten Antenne 11 oder der dritten Antenne 12 kombiniert werden. Entsprechend dem dritten Ausführungsbeispiel nach Figur 3 könnte das fünfte Ausführungsbeispiel nach Figur 6 auch dahingehend abgewandelt werden, dass der erste Ausgang 155 der Auswertungsschaltung 5 direkt und nicht über die zweite Verbindungsleitung 23 mit dem Eingang der ersten Steuervorrichtung 6 verbunden ist und dass der zweite Ausgang 160 der Auswertungsschaltung 5 direkt mit dem Eingang der zweiten Steuervorrichtung 140 verbunden ist. In diesem Fall sind dann keine Tiefpässe zur Vermeidung von hochfrequenten Störungen mehr erforderlich.

Die Antennenumschalter 20, 40 können sich entweder in der Nähe der Antennen 10, 11, 12, 13 abgesetzt vom Empfangsgerät 30 befinden, wie dies in Figur 6 beispielhaft dargestellt ist, oder auch analog zur ersten Ausführungsform im Empfangsgerät 30 selbst.

Die Antennen werden nun bei den einzelnen Ausführungsbeispielen so angebracht, dass die Richtdiagramme der möglichen Antennenkombinationen einen unterschiedlichen Charakter aufweisen. Wenn bei einer solchen Anordnung der Antennen nachhaltig Störungen bei einer Antennenkombination auftreten, so ist die Wahrscheinlichkeit groß, dass die andere Antennenkombination oder die anderen Antennenkombinationen aufgrund ihrer anderen Richtdiagramm-Charakteristiken weniger oder mehr Störungen aufnehmen, aber nicht genau so viele, so dass die Diversity-Funktion der Diversity-Antennenanordnung 100 gewährleistet werden kann. Entscheidend dafür ist also, dass die Kombinationen der über den ersten Antennenumschalter 20 und gegebenenfalls den zweiten Antennenumschalter 40 mit dem Empfangsgerät 30 bzw. der Empfangsvorrichtung 4 gleichzeitig verbindbaren Antennen unterschiedliche Richt-Charakteristiken aufweisen.

Die Erfindung ist nicht auf die Verwendung von einem oder zwei Antennenumschaltern beschränkt. Vielmehr können beliebig viele Antennenumschalter in der beschriebenen Weise und beliebig viele zugeordnete Bewertungsmodule eingesetzt werden. Auch ist die Zahl der von einem Antennenumschalter mit dem Empfangsgerät 30 verbindbaren Antennen nicht auf zwei begrenzt, sondern kann auch größer sein. Beliebig viele Antennen können auch fest mit dem Empfangsgerät 30 und einem eigenen zugehörigen Bewertungsmodul wie die erste Antenne 10 gemäß dem ersten Ausführungsbeispiel verbunden sein. Bei einer beispielhaften Ausbildung des Empfangsgerätes 30 als Autoradio werden die Antennen an dem entsprechenden Fahrzeug derart angebracht, dass die gewünschten unterschiedlichen Richtcharakteristiken wie beschrieben gebildet werden.

## Patentansprüche

1. Diversity-Antennenanordnung (100) mit einem Antennenumschalter (20) zum Umschalten zwischen verschiedenen Antennen (11, 12), einer Auswertungsschaltung (5) zur Auswertung der Empfangsqualität eines Signals, das von einem über den Antennenumschalter (20) einer Empfangsvorrichtung (4) zugeführten Empfangssignal (24, 25) mindestens einer der Antennen (11, 12) abgeleitet ist, und zur Ausgabe eines in Abhängigkeit der ermittelten Empfangsqualität gebildeten Auswertungssignals und einer Steuervorrichtung (6), die den Antennenumschalter (20) in Abhängigkeit des Auswertungssignals ansteuert, **dadurch gekennzeichnet, dass** eine Bewertungsvorrichtung (1, 2) das über den Antennenumschalter (20) der Empfangsvorrichtung (4) zugeführte Signal (24; 25) mit einem ersten Koeffizienten bewertet, dass mindestens eine weitere Antenne (10) vorhanden ist, deren Empfangssignal (22) die Bewertungsvorrichtung (1, 2) mit einem zweiten Koeffizienten bewertet, dass eine Summierschaltung (3) die mit den Koeffizienten bewerteten Signale addiert, dass eine Regelschaltung (110), die mit dem Ausgang der Summierschaltung (3) und dem Eingang der Bewertungsvorrichtung (1, 2) verbunden ist, die Koeffizienten im Sinne einer Minimierung zeitlicher Schwankungen der Amplitude des Summensignals bildet, und dass die Auswertungsschaltung (5) die Empfangsqualität des Summensignals auswertet.

2. Diversity-Antennenanordnung (100) nach Anspruch 1, **dadurch gekennzeichnet, dass** die Auswertungsschaltung (5) eine Störschwellenschaltung (115, 120, 125) umfasst und dass die Auswertungsschaltung (5) ein Auswertungssignal abgibt, das die Steuervorrichtung (6) zur Umschaltung des Antennenumschalters (20) veranlasst, wenn eine Störung des Summensignals eine vorgegebene Störschwelle überschreitet.

3. Diversity-Antennenanordnung (100) nach Anspruch 2, **dadurch gekennzeichnet, dass** die Störschwellenschaltung (115, 120, 125) einen Amplitudenschwellwertdetektor (115) umfasst und dass die Auswertungsschaltung (5) ein Auswertungssignal abgibt, das die Steuervorrichtung (6) zur Umschaltung des Antennenumschalters (20) veranlasst, wenn ein Amplitudeneinbruch des Summensignals eine vorgegebene Amplitudenschwelle überschreitet.

4. Diversity-Antennenanordnung (100) nach Anspruch 3, **dadurch gekennzeichnet, dass** die Störschwellenschaltung (115, 120, 125) einen Frequenzhubschwellwertdetektor (120) umfasst und dass die Auswertungsschaltung (5) ein Auswertungssignal abgibt, das die Steuervorrichtung (6) zur Umschaltung des Antennenumschalters (20) veranlasst, wenn ein Frequenzhubpuls des Summensignals eine vorgegebene Frequenzhubschwelle überschreitet.

5. Diversity-Antennenanordnung (100) nach einem der vorherigen Ansprüche, **dadurch gekennzeichnet, dass** der Antennenumschalter (20) mit der Bewertungsvorrichtung (1, 2) über eine Verbindungsleitung (23) verbunden ist, auf der zum einen die empfangenen Signale (24, 25) mindestens einer der Antennen (11, 12) zur Bewertungsvorrichtung (1, 2) und zum anderen die Auswertungssignale von der Auswertungsschaltung (5) zur Steuerschaltung (6) übertragen werden.

6. Diversity-Antennenanordnung (100) nach Anspruch 5, **dadurch gekennzeichnet, dass** am Ausgang der Auswertungsschaltung (5) und/oder am Eingang der Steuervorrichtung (6) ein Tiefpass (130, 135) angeordnet ist.

7. Diversity-Antennenanordnung (100) nach einem der vorherigen Ansprüche, **dadurch gekennzeichnet, dass** die mindestens eine weitere Antenne (10) über einen weiteren Antennenumschalter (40) mit der Bewertungsvorrichtung (1, 2) verbindbar ist.

8. Diversity-Antennenanordnung (100) nach Anspruch 7, **dadurch gekennzeichnet, dass** die Steuervorrichtung (6) auch den weiteren Antennenumschalter (40) ansteuert.

9. Diversity-Antennenanordnung (100) nach Anspruch 7, **dadurch gekennzeichnet, dass** eine weitere Steuervorrichtung (140) vorgesehen ist, die den weiteren Antennenumschalter (40) ansteuert.

10. Diversity-Antennenanordnung (100) nach einem der vorherigen Ansprüche, **dadurch gekennzeichnet, dass** die Kombinationen der mit der Empfangsvorrichtung (4) gleichzeitig verbindbaren Antennen (10, 11, 12, 13) unterschiedliche Richtcharakteristiken aufweisen.

## Claims

1. Diversity antenna arrangement (100) having an antenna changeover switch (20) for switching between different antennas (11, 12), having an evaluation circuit (5) for evaluation of the reception quality of a signal which is derived from a received signal (24, 25), which is supplied via the antenna changeover switch (20) to a receiving apparatus (4) from at least one of the antennas (11, 12), and for emission of an evaluation signal, which is formed as a function of the determined reception quality, and having a control apparatus (6) which drives the antenna changeover switch (20) as a function of the evaluation signal, **characterized in that** a weighting apparatus (1, 2) weights the signal (24; 25), which is supplied via the antenna changeover switch (20) to the receiving apparatus (4), with a first coefficient, **in that** at least one further antenna (10) is provided, whose received signal (22) is weighted by the weighting apparatus (1, 2) with a second coefficient, **in that** an addition circuit (3) adds the signals which have been weighted with the coefficients, **in that** a control circuit (110), which is connected to the output of the addition circuit (3) and to the input of the weighting apparatus (1, 2), forms the coefficients in the sense of minimizing time fluctuations in the amplitude of the sum signal, and **in that** the evaluation circuit (5) evaluates the reception quality of the sum signal.

2. Diversity antenna arrangement (100) according to Claim 1, **characterized in that** the evaluation circuit (5) has an interference threshold circuit (115, 120, 125), and **in that** the evaluation circuit (5) emits an evaluation signal which causes the control apparatus (6) to switch the antenna changeover switch (20) when any interference in the sum signal exceeds a predetermined interference threshold.

3. Diversity antenna arrangement (100) according to Claim 2, **characterized in that** the interference threshold circuit (115, 120, 125) has an amplitude threshold value detector (115) and **in that** the evaluation circuit (5) emits an evaluation signal which causes the control apparatus (6) to switch the antenna changeover switch (20) when any amplitude drop in the sum signal exceeds a predetermined amplitude threshold.

4. Diversity antenna arrangement (100) according to Claim 3, **characterized in that** the interference threshold circuit (115, 120, 125) has a frequency shift threshold value detector (120), and **in that** the evaluation circuit (5) emits an evaluation signal which causes the control apparatus (6) to switch the antenna changeover switch (20) when a frequency shift pulse in the sum signal exceeds a predetermined frequency shift threshold.

5. Diversity antenna arrangement (100) according to one of the preceding claims, **characterized in that** the antenna changeover switch (20) is connected to the weighting apparatus (1, 2) via a connecting line (23) on which, firstly, the received signals (24, 25) of at least one of the antennas (11, 12) are transmitted to the weighting apparatus (1, 2) and on which, secondly, the evaluation signals are transmitted from the evaluation circuit (5) to the control circuit (6).

6. Diversity antenna arrangement (100) according to Claim 5, **characterized in that** a low-pass filter (130, 135) is arranged at the output of the evaluation circuit (5) and/or at the input of the control apparatus (6).

7. Diversity antenna arrangement (100) according to one of the preceding claims, **characterized in that** the at least one further antenna (10) can be connected to the weighting apparatus (1, 2) via a further antenna changeover switch (40).

8. Diversity antenna arrangement (100) according to Claim 7, **characterized in that** the control apparatus (6) also drives the further antenna changeover switch (40).

9. Diversity antenna arrangement (100) according to Claim 7, **characterized in that** a further control apparatus (140) is provided, and drives the further antenna changeover switch (40).

10. Diversity antenna arrangement (100) according to one of the preceding claims, **characterized in that** the combinations of the antennas (10, 11, 12, 13) which can be connected to the receiving apparatus (4) at the same time have different directional characteristics.

## Revendications

1. Système d'antennes diversifié (100) comprenant un commutateur d'antennes (20) pour commuter entre différentes antennes (11, 12), un circuit d'exploitation (5) pour exploiter la qualité de réception d'un signal dérivé d'un signal de réception (24, 25) fourni à travers le commutateur d'antennes (20) à un dispositif de réception (4), à partir d'au moins l'une des antennes (11, 12) et pour émettre un signal d'exploitation formé en fonction de la qualité de réception déterminée, ainsi qu'un dispositif de commande (6) qui commande le commutateur d'antennes (20) en fonction du signal d'exploitation,
**caractérisé par**
un dispositif d'évaluation (1, 2) qui évalue le signal (24, 25) fourni par le commutateur d'antennes (20) du dispositif de réception (4) avec un premier coefficient,
au moins une autre antenne (10) dont le signal de réception (22) est évalué par le dispositif d'évaluation (1, 2) avec un second coefficient,
un circuit additionneur (3) additionnant les signaux évalués avec les coefficients,
un circuit de régulation (110) relié à la sortie du circuit additionneur (3) et à l'entrée du dispositif d'évaluation (1, 2) formant les coefficients dans le sens d'un minimum des variations dans le temps de l'amplitude du signal de somme, alors que
le circuit d'exploitation (5) exploite la qualité de réception du signal somme.

2. Dispositif d'antennes diversifié (100) selon la revendication 1,
**caractérisé en ce que**
le circuit d'exploitation (5) comprend un circuit à seuil de perturbation (115, 120, 125) et
le circuit d'exploitation (5) émet un signal d'exploitation qui demande au dispositif de commande (6) de commuter le commutateur d'antennes (20) si une perturbation du signal somme dépasse un seuil de perturbation prédéfini.

3. Dispositif d'antennes diversifié (100) selon la revendication 2,
**caractérisé en ce que**
le circuit de seuil de perturbation (115, 120, 125) comprend un détecteur de seuil d'amplitude (115) et le circuit d'exploitation (5) fournit un signal d'exploitation qui demande au dispositif de commande (6) de commuter le commutateur d'antennes (20) si l'effondrement de l'amplitude du signal somme dépasse un seuil d'amplitude prédéfini.

4. Dispositif d'antennes diversifié (100) selon la revendication 3,
**caractérisé en ce que**
le circuit de seuil de perturbation (115, 120, 125) comprend un détecteur de seuil d'excursion de fréquence (120) et le circuit d'exploitation (5) émet un signal d'exploitation qui demande au dispositif de commande (6) de commuter le commutateur d'antennes (20) si l'excursion de fréquence du signal somme dépasse un seuil d'excursion de fréquence prédéfini.

5. Dispositif d'antennes diversifié (100) selon l'une des revendications précédentes,
**caractérisé en ce que**
le commutateur d'antennes (20) est relié au dispositif d'évaluation (1, 2) par une ligne de liaison (23) transmettant l'un des signaux de réception (24, 25) d'au moins une des antennes (11, 12) au dispositif d'évaluation (1, 2) et les signaux d'exploitation du circuit d'exploitation (5) au circuit de commande (6).

6. Dispositif d'antennes diversifié (100) selon la revendication 5,
**caractérisé par**
un filtre passe-bas (130, 135) à la sortie du circuit d'exploitation (5) et/ou à l'entrée du dispositif de commande (6).

7. Dispositif d'antennes diversifié (100) selon l'une des revendications précédentes,
**caractérisé par**
au moins une autre antenne (10) reliant un autre commutateur d'antennes (40) au dispositif d'exploitation (1, 2).

8. Dispositif d'antennes diversifié (100) selon la revendication 7,
**caractérisé en ce que**
le dispositif de commande (6) commande également l'autre commutateur d'antennes (40).

9. Dispositif d'antennes diversifié (100) selon la revendication 7,
**caractérisé par**
un autre dispositif de commande (140) qui commande l'autre commutateur d'antennes (40).

10. Dispositif d'antennes diversifié (100) selon l'une des revendications précédentes,
**caractérisé en ce que**
les combinaisons des antennes (10, 11, 12, 13) susceptibles d'être reliées simultanément au dispositif de réception (4) présentent des caractéristiques directionnelles différentes.
